# EUROPEAN PATENT SPECIFICATION

(11) **EP 2 977 178 B1**
(45) Date of publication and mention of the grant of the patent: **06.06.2018**
(21) Application number: 13878906.0
(22) Date of filing: 27.04.2013
(51) Int. Cl.: B29C 45/64, B29C 49/56, B29C 49/36, B29L 22/00

(54) **BLOW MOUDLING MACHINE WITH MOULD LOCKING MEANS**
BLASMASCHINE MIT BLASFORMVERRIEGLUNG
DISPOSITIF DE MOULAGE PAR SOUFFLAGE AVEC SYSTÈM DE VERROUILLAGE DES MOULES

(30) Priority: 19.03.2013 CN 201310088984
(43) Date of publication of application: 27.01.2016
(73) Proprietor: Jiangsu Newamstar Packaging Machinery Co., Ltd, Zhangjiagang, Jiangsu 215624 (CN)
(72) Inventor: DONG, Hailong, Zhangjiagang Jiangsu 215624 (CN); YANG, Xiaying, Zhangjiagang Jiangsu 215624 (CN); YANG, Xinliang, Zhangjiagang Jiangsu 215624 (CN); HE, Deping, Zhangjiagang Jiangsu 215624 (CN)
(74) Representative: Gulde & Partner
(86) International application number: PCT/CN2013/074856
(87) International publication number: WO 2014/146321

(56) References cited:
- CN-A- 102 363 420
- CN-A- 102 380 949
- CN-A- 103 171 126
- CN-A- 103 171 137
- CN-A- 103 171 139
- CN-U- 203 157 121
- CN-U- 203 157 122
- CN-U- 203 185 628
- CN-U- 203 185 634
- JP-A- H0 924 540
- US-A1- 2010 203 185
- US-A1- 2012 177 771

## Description

### Field of the Invention

The present invention relates to the field of a processing device for a beverage bottle, and more particularly to a unilateral locking mechanism for a bottom mould of a bottle blowing machine.

### Description of the Related Art

A bottle blowing machine of the prior art generally comprises a machine frame, a left mould, a right mould and a bottom mould which are disposed on the machine frame, as well as a driving mechanism and a positioning mechanism. A bottom mould locking mechanism of a linear bottle blowing machine, as disclosed in patent publication No. CN201755911U, comprises a mould mounting plate, a bottle mould, a bottom mould, an actuating mechansim, a positioning mechanism and a supporting seat. The end of the cavity of the bottle mould is sleeved with the bottom mould which is connected with the actuating mechanism. The positioning mechanism is horizontally disposed on the support seat and comprises a positioning block air cylinder and a positioning block connected with each other. The actuating mechanism comprises a bottom mould mounting plate and a bottom mould elevating air cylinder. An upper surface of the bottom mould mounting plate is connected with the bottom mould, and a lower surface of the bottom mould mounting plate is connected with the bottom mould elevating air cylinder which is mounted on a support frame. From this, the bottom mould locking mechanism disclosed in the above patent is quite bulky.

Further devices corresponding to the preamble of claim 1 are known from US 2010/203185 A1 and US 2012/177771 A1.

### Summary of the Invention

A technical problem to be solved by the invention is to provide an improved bottom mould unilateral locking mechanism.

In order to solve the problem a system in accordance with claim 1 is proposed. In a specific embodiment, the rotation member is connected with the power source by a rotation shaft, and the shaft axis of the rotation shaft is the second axis.

Preferably, a through-hole is opened on the machine frame for the rotation shaft extending through therein.

More preferably, the rotation member has a guiding surface thereon and a protrusion is formed on the swing member, the protrusion slidably contacts with the guiding surface relative to each other, and the distance between the contact position of the protrusion with the guiding surface and second axis changes with the rotation of the rotation member. With the rotation of the rotation member, the protrusion moves under the guiding of the guiding surface, such that the swing member swings around the first axis.

More preferably, an elastic member is arranged between the swing member and the machine frame for providing a restoring force for the swing member. In the course of rotation of the rotation member, when the contact position of the protrusion with the guiding surface gets farther and farther away from the second axis, the swing member is pushed by the rotation member to swing. Otherwise, in the course of rotation of the rotation member, when the contact position of the protrusion with the guiding surface becomes nearer and nearer to the second axis, an external force is required to drive the swing member to swing, and the elastic member is used for providing such an external force. Certainly, the external force can be provided in other ways, for example, the swing member is driven by the rotation member.

Preferably, a convex column is formed on the sliding block and a sliding groove is opened on the swing member at a distance from the first axis, the convex column is slidably inserted into the sliding groove.

Preferably, the first axis and the second axis are parallel to each other.

In a specific embodiment, the rotation member, the swing member and the sliding block are located above an upper surface of the machine frame.

Due to the above technical solution, the present invention has the following advantages as compared with the prior art: in the invention a different locking mechanism from the prior art is utilized, such that the bottom mould is locked in the mould closing state, thereby making the whole device have smaller volume than the same in the prior art.

### Brief Description of the Drawings

Fig.1 is a top view of a unilateral locking mechanism in the mould opening state according to the invention;
Fig.2 is another top view of the unilateral locking mechanism in the mould closing state according to the invention.

### List of Reference Signs

- 2: machine frame;
- 5: rotation shaft;
- 7: rotation member;
- 11: bottom mould;
- 31: sliding block;
- 32: convex column;
- 33: guide rail;
- 34: sliding groove;
- 35: swing member;
- 37: protrusion;
- 4: torsional spring;
- 71: guiding surface.

### Description of the Preferred Embodiments

The present invention will be described hereinafter with reference to the accompanying drawings. It is to be noted, however, that the drawings are given only for illustrative purpose and therefore not to be considered as limiting of its scope, for the invention may admit to other equally effective embodiments.

As shown in fig.s, a unilateral locking mechanism for a bottom mould is mounted on a bottle blowing machine. The configuration of the bottle blowing machine is well known for one skilled in the art and not involved by the technical points of the invention, thus, only the machine frame 2 of the bottle blowing machine involved in the invention is shown in the figures, and the other parts are omitted.

The locking mechanism comprises a guide rail 33 disposed on a machine frame 2 of the bottle blowing machine, a sliding block 31 slidable along the guide rail 33, a swing member 35 swingably connected on the machine frame 2 around a first axis for driving the sliding of the sliding block 31, and a rotation member 7 for controlling the swinging of the swing member 35 relative to the machine frame 2. The rotation member 7 is connected with a power source and driven by the power source to rotate relative to the machine frame 2 around a second axis.

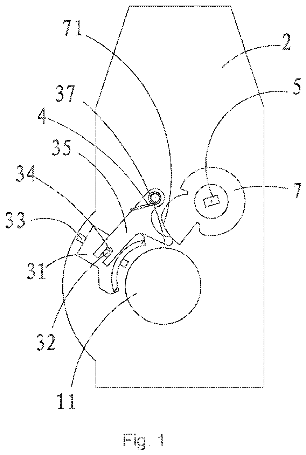

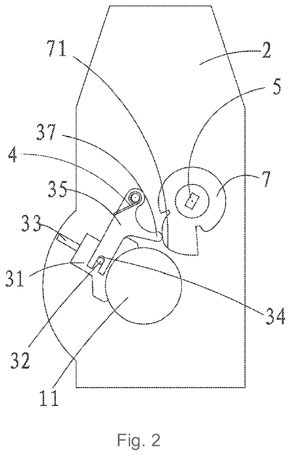

When the locking mechanism is in a locked state, the sliding block 31 is inserted between the bottom mould 11 and the machine frame 2 and contacts against them, such that the bottom mould 11 is separated from the machine frame 2, as shown in fig.2. When the locking mechanism is in an unlocked state, the sliding block 31 is detached from the bottom mould 11 to remove the block effect on the bottom mould 11, such that the bottom mould 11 is released, as shown in fig.1.

The rotation member 7 is fixedly disposed on a rotation shaft 5 which is rotatable around it's own shaft axis, and the shaft axis of the rotation shaft 5 is the second axis. The rotation shaft 5 is driven by a power source to rotate.

Preferably, the first axis and the second axis are parallel to each other. The first axis and second axis are not shown in the figures, actually, both the first and second axes are straight lines perpendicular to the paper surface where the figures are shown.

In the preferred embodiment shown in the figures, the guide rail 33 is a linear rail disposed above the upper surface of the machine frame 2. Best, the extending direction of the guide rail 33 is parallel to the plane where the upper surface of the machine frame 2 is. The extending direction of the guide rail 33 is perpendicular to the first axis and the second axis.

The rotation member 7, the swing member 35 and the sliding block 31 are located above the upper surface of the machine frame 2. A through-hole is opened on the machine frame 2 for the rotation shaft 5 extending through therein. The part of the rotation shaft 5 located above the upper surface of the machine frame 2 is connected with the rotation member 7, and the part located below the machine frame 2 is connected with the power source. The configuration of the power source is well known for one skilled in the art and is not involved by the main technical points of the invention, thus, the power source is not shown in figures.

Specifically, referring to the embodiment shown in figures 1-2, one end of the swing member 35 is connected with the machine frame 2 by a pivot shaft, and a sliding groove 34 is opened on the other end of the swing member 35, and the portion of the swing member where the sliding groove 34 is opened forms a transmission fork configuration. The shaft axis of the pivot shaft is the first axis as described above. A convex column 32 protruding upwards is formed on the sliding block 31. The convex column 32 is inserted into the sliding groove 34 and can slide along the sliding groove 34. Preferably the central axis of the sliding groove 34 and the first axis intersect and are vertical to each other.

Actually, the sliding groove 34 is not necessarily opened on the other end of the swing member 35, as long as it is formed on the swing member 35 at a distance from the first axis.

The rotation member 7 has a guiding surface 71 thereon and a protrusion 37 is formed on the swing member 35. The protrusion 37 slidably contacts with the guiding surface 71 relative to each other, and the distance between the contact position of the protrusion 37 with the guiding surface 71 and the second axis changes with the rotation of the rotation member 7.

A torsional spring 4 is arranged between the swing member 35 and the machine frame 2 for providing a restoring force for the swing member 35.

As shown in fig.s 1-2, provided that the rotation member 7 rotates anticlockwise, the protrusion 37 contacting with the rotation member 7 will move towards the second axis under the guiding of the guiding surface 71, at this time, the swing member 35 rotates anticlockwise under the applied force of the torsional spring 4, the transmission fork portion of the swing member 35 drives the sliding block 31 to move along the guide rail 33 to a position shown in fig. 2, namely, the sliding block 31 is inserted between the bottom mould 11 and the machine frame 2, and the bottom mould 11 is restricted. Again referring to the conversion from the fig.2 to fig.1, provided that the rotation member 7 rotates clockwise, the contact position of the guiding surface 71 with the protrusion 37 is farther and farther away from the second axis, the protrusion 37 is pushed to move, in this course, the swing member 35 overcomes the applied force of the torsional spring 4 to rotate clockwise, and drives the sliding block 31 to move into a position shown in fig. 1 by means of the transmission fork portion, namely, the sliding block 31 is detached from the bottom mould 11 such that the bottom mould is released.

When the blowing mould assembly (not shown) of the bottle blowing machine is in the mould closing state, the bottom mould is restricted by the locking mechanism of the invention, such that a certain distance is formed between the bottom mould 11 and the machine frame 2. When the blowing mould assembly is in the mould opening state, the rotation shaft 5 is driven by the power source to rotate, and the rotation shaft 5 drives the rotation member 7 to rotate, the swing member 35 swings with the rotation of the rotation member 7, such that the sliding block 31 slides along the guide rail 33, afterwards the locking mechanism is opened.

## Claims

1. A system comprising:
a bottle blow moulding machine having a machine frame (2),
a unilateral locking mechanism for a bottom mould, mounted on the bottle blowing machine,
the system being **characterized in** the locking mechanism comprising:
a guide rail (33) disposed on the machine frame (2) of the bottle blowing machine;
a sliding block (31) slidable along the guide rail (33);
a swing member (35) swingably connected on the machine frame (2) around a first axis for driving the sliding of the sliding block (31);
a rotation member (7) for controlling the swinging of the swing member (35) relative to the machine frame (2), the rotation member (7) being connected with a power source and driven by the power source to rotate relative to the machine frame (2) around a second axis;
wherein when the locking mechanism is in a locked state, the sliding block (31) is inserted between the bottom mould (11) and the machine frame (2) and contacts against them, such that the bottom mould (11) is separated from the machine frame (2), and
wherein when the locking mechanism is in an unlocked state, the sliding block (31) is detached from the bottom mould (11).

2. The system as claimed in claim 1, wherein the rotation member (7) is connected with the power source by a rotation shaft (5), and the shaft axis of the rotation shaft (5) being the second axis.

3. The system as claimed in claim 2, wherein a through-hole is opened on the machine frame (2) for the rotation shaft (5) extending through therein.

4. The system as claimed in claim 1, wherein the rotation member (7) has a guiding surface (71) thereon and a protrusion (37) is formed on the swing member (35), the protrusion (37) slidably contacting with the guiding surface (71) relative to each other, and the distance between the contact position of the protrusion (37) with the guiding surface (71) and the second axis changing with the rotation of the rotation member(7).

5. The system as claimed in claim 1 or 4, wherein an elastic member is arranged between the swing member (35) and the machine frame (2) for providing a restoring force for the swing member (35).

6. The system as claimed in claim 1, wherein a convex column (32) is formed on the sliding block (31) and a sliding groove (34) is opened on the swing member (35) at a distance from the first axis, the convex column (32) being slidably inserted into the sliding groove (34).

7. The system as claimed in any of claims 1-4 and 6, wherein the first axis and the second axis are parallel to each other.

8. The system as claimed in claim 1, wherein the rotation member (7), the swing member (35) and the sliding block (31) are located above an upper surface of the machine frame (2).

## Patentansprüche

1. Ein System, aufweisend:
eine Flaschenblasmaschine, die einen Maschinenrahmen (2) aufweist,
einen einseitigen Verriegelungsmechanismus für eine Unterform, der auf der Flaschenblasmaschine montiert ist,
wobei das System **dadurch gekennzeichnet ist, dass** der Verriegelungsmechanismus aufweist:
eine Führungsschiene (33), die auf dem Maschinenrahmen (2) der Flaschenblasmaschine angeordnet ist;
einen Gleitstein (31), der entlang der Führungsschiene (33) gleiten kann;
ein Schwingelement (35), das auf dem Maschinenrahmen (2) um eine erste Achse herum schwingbar angeschlossen ist, um das Gleiten des Gleitsteins (31) anzutreiben;
ein Drehelement (7) zum Steuern des Schwingens des Schwingelements (35) bezüglich des Maschinenrahmens (2), wobei das Drehelement (7) mit einer Energiequelle verbunden ist und von der Energiequelle angetrieben wird, um sich bezüglich des Maschinenrahmens (2) um eine zweite Achse herum zu drehen;
wobei, wenn der Verriegelungsmechanismus in einem verriegelten Zustand ist, der Gleitstein (31) zwischen die Unterform (11) und den Maschinenrahmen (2) eingesetzt ist und an ihnen anschlägt, derart, dass die Unterform (11) vom Maschinenrahmen (2) getrennt ist, und
wobei, wenn der Verriegelungsmechanismus in einem unverriegelten Zustand ist, der Gleitstein (31) von der Unterform (11) losgelöst ist.

2. Das System nach Anspruch 1, wobei das Drehelement (7) durch eine Drehwelle (5) mit der Energiequelle verbunden ist, und wobei die Wellenachse der Drehwelle (5) die zweite Achse ist.

3. Das System nach Anspruch 2, wobei ein Durchgangsloch auf dem Maschinenrahmen (2) für die Drehwelle (5), die dort hindurch verläuft, geöffnet ist.

4. Das System nach Anspruch 1, wobei das Drehelement (7) eine Führungsfläche (71) darauf aufweist, und wobei ein Vorsprung (37) auf dem Schwingelement (35) ausgebildet ist, wobei der Vorsprung (37) und die Führungsfläche (71) gleitend bezüglich einander miteinander in Kontakt stehen, und wobei sich der Abstand zwischen der Kontaktposition des Vorsprungs (37) mit der Führungsfläche (71) und der zweiten Achse mit der Drehung des Drehelements (7) ändert.

5. Das System nach Anspruch 1 oder 4, wobei ein elastisches Element zwischen dem Schwingelement (35) und dem Maschinenrahmen (2) angeordnet ist, um eine Rückstellkraft für das Schwingelement (35) bereitzustellen.

6. Das System nach Anspruch 1, wobei eine konvexe Säule (32) auf dem Gleitstein (31) ausgebildet ist und eine Gleitnut (34) in einem Abstand von der ersten Achse auf dem Schwingelement (35) geöffnet ist, wobei die konvexe Säule (32) gleitend in die Gleitnut (34) eingesetzt ist.

7. Das System nach einem der Ansprüche 1-4 und 6, wobei die erste Achse und die zweite Achse parallel zueinander sind.

8. Das System nach Anspruch 1, wobei das Drehelement (7), das Schwingelement (35) und der Gleitstein (31) über einer Oberseite des Maschinenrahmens (2) angeordnet sind.

## Revendications

1. Un système, comprenant:
un dispositif de moulage par soufflage de bouteilles ayant un bâti de machine (2),
un mécanisme de verrouillage unilatéral pour un moule inférieur monté sur le dispositif de moulage par soufflage de bouteilles,
le système étant **caractérisé en ce que** le mécanisme de verrouillage comprend :
un rail de guidage (31) disposé sur le bâti de machine (2) du dispositif de moulage par soufflage de bouteilles ;
un coulisseau (31) pouvant coulisser le long du rail de guidage (33),
un élément pivotant (35) relié de manière pivotante sur le bâti de machine (2) autour d'un premier axe pour entraîner le glissement du coulisseau (31) ;
un élément de rotation (7) destiné à commander le pivotement de l'élément pivotant (35) par rapport au bâti de machine (2), l'élément de rotation (7) étant relié à une source d'énergie et étant entraîné par la source d'énergie afin de tourner par rapport au bâti de machine (2) autour d'un second axe ;
dans lequel, lorsque le mécanisme de verrouillage est dans un état verrouillé, le coulisseau (31) est inséré entre le moule inférieur (11) et le bâti de machine (2) et vient en contact contre ceux-ci de telle manière que le moule inférieur (1) est séparé du bâti de machine (2), et
dans lequel, lorsque le mécanisme de verrouillage est dans un état non verrouillé, le coulisseau (31) est détaché du moule inférieur (11).

2. Le système selon la revendication 1, dans lequel l'élément de rotation (7) est relié à la source d'énergie par un arbre de rotation (5), et l'axe d'arbre de l'arbre de rotation (5) est le second axe.

3. Le système selon la revendication 2, dans lequel un trou traversant est ouvert sur le bâti de machine (2) pour l'arbre de rotation (5) s'étendant à travers celui-ci.

4. Le système selon la revendication 1, dans lequel l'élément de rotation (7) a une surface de guidage (71) sur celui-ci, et une saillie (37) est formée sur l'élément pivotant (35), la saillie (37) et la surface de guidage (71) venant en contact de manière coulissante l'une par rapport à l'autre, et la distance entre la position de contact de la saillie (37) avec la surface de guidage (71) et le second axe changeant avec la rotation de l'élément de rotation (7).

5. Le système selon la revendication 1 ou la revendication 4, dans lequel un élément élastique est disposé entre l'élément pivotant (35) et le bâti de machine (2) afin de fournir une force de rappel pour l'élément pivotant (35).

6. Le système selon la revendication 1, dans lequel une colonne convexe (32) est formée sur le coulisseau (31), et une rainure de coulissement (34) est ouverte sur l'élément pivotant (35) à une distance du premier axe, la colonne convexe (32) étant insérée de manière coulissante dans la rainure de coulissement (34).

7. Le système selon l'une des revendications 1-4 et 6, dans lequel le premier axe et le second axe sont parallèles l'un à l'autre.

8. Le système selon la revendication 1, dans lequel l'élément de rotation (7), l'élément pivotant (35) et le coulisseau (31) sont situés au-dessus d'une surface supérieure du bâti de machine (2).
